# EUROPEAN PATENT SPECIFICATION

(11) **EP 2 929 769 B1**
(45) Date of publication and mention of the grant of the patent: **13.11.2019**
(21) Application number: 13859999.8
(22) Date of filing: 22.11.2013
(51) Int. Cl.: A01C 21/00, A01B 79/02, A01B 79/00

(54) **METHOD FOR INCREASING CROP YIELDS**
VERFAHREN ZUR ERHÖHUNG VON ERNTEERTRÄGEN
PROCÉDÉ D'AUGMENTATION DES RÉCOLTES DE CULTURES AGRICOLES

(30) Priority: 06.12.2012 RU 2012152715
(43) Date of publication of application: 14.10.2015
(73) Proprietor: Brindyuk, Sergei Vladimirovich, Alekseevka, Belgorodskaya obl. (RU)
(72) Inventor: Brindyuk, Sergei Vladimirovich, Alekseevka, Belgorodskaya obl. (RU)
(74) Representative: Hoffmann Eitle
(86) International application number: PCT/RU2013/001048
(87) International publication number: WO 2014/088462

(56) References cited:
- EP-A2- 2 989 876
- FR-A1- 2 428 555
- RU-C- 1 787 332
- RU-C- 1 787 332
- RU-C1- 2 297 748
- SU-A1- 913 962
- Anonymous: "UTEC BAPC 271 PazbpacyBatelb PTSD 1,0 OppyckiBatelb OL-1,0 SHihy GPS haBiGatopy G. AlekceeBka Kompahiya BelaGpocpetsmash", , 12 May 2010 (2010-05-12), XP55519936, Retrieved from the Internet: URL:https://web.archive.org/web/2010051218 4549/http://barsagro.ru/utes_bars_271 [retrieved on 2018-10-30]

## Description

The invention is related to the agricultural production, namely to the production of seed crops and can be used, among other things, in the areas of risk farming.

One of the issues related to receiving of the high yield of the specified crops is the issue of their timely sowing, soil moisture conservation and increase in productivity of crops under the condition of the maximum ecological properties of goods produced.

Weeding is generally carried out by way of pre-sowing land tilling. However this method does not always deliver favorable results as when cultivating only well-rooted weeds are removed. The plants with the seeds that only started germinating without striking the root system will be growing after cultivation as well. Soil cultivation being deferred to a later date (with account of the weeds highest germination ability) is inadvisable from the agricultural point of view, as there are the optimal time periods for sowing of crops which significantly affect the crop productivity. Besides, the land cultivation process is connected with the intensive loss of spring moisture deposits by the soil, which is also considered to be an unfavorable factor.

There is a well-known method of increasing crop productivity connected with breaking up of soil and application of fertilizers (see patent RF No2358428 class IPC A01N 39\04)

There is a well-known method of increasing crop productivity connected with breaking up of soil, application of fertilizers and sowing time optimization (see patent RF No2445763 class IPC A01G\04 as of 10.09.2012 - prototype).

A further method of cultivation of spring crops is known from RU 1 787 332 C.

The common drawbacks of the popular methods are their high prime cost, complexity of the process and low ecological compatibility due to the considerable amount of the inorganic fertilizers being applied to the crop lands, which has an adverse effect on the soil microflora bringing down the humus.

The invention proposed is aimed at eliminating the said deficiencies, in particular simplifying the crop productivity increase process, reducing its prime cost and increasing ecological compatibility.

The specified goal can be achieved due to the fact that where the well-known crop productivity increase method based on seed time optimization is used, including in the areas of risk farming, according to the invention the seeds are planted to the wet, overmoistened and / or slurry-type soil, perhaps under the rain, right after the rain or immediately after the snow cover melting, the sowing unit traveling speed being 1-60 km\h, provided that a technological transport vehicle capable of operating under pressure on soil of 0,4kgf\cm² or less up to zero, for example, "Bars UTES 271" on the elastic tyre covers or the air-cushion device is used as a sowing unit power device. In this case the seeds are placed just under the overmoistened soil layer with the depth of penetration being from 0,2 to 15 cm.

The abovementioned cumulative features reveal new properties meaning that due to their application the process of crop productivity increase is simplified, its prime cost is reduced and ecological compatibility is increased (by means of decrease or complete refusal of fertilizing while achieving similar or higher crop productivity).

The best way to implement the proposed invention is the following option.

The soil condition as at the seeding date should correspond to the moisture that is significantly higher than the moisture of the physically mature soil (of slurry type, preferably after or during the rain), which considerably reduces friction on the soil and resistance force of the sowing unit openers and results in sowing energy cost reduction. As the technological transport vehicle (a sowing machine carrier) there should be used a device capable of moving at the pressure on soil amounting to 0,3-0,35 kgf\cm². In such case it makes no wheel track on the sowing field and the wheel ground contact is enough for operation of the sowing machine assembly units. (Air-cushion devices seem better in terms of the soil impact reduction but they are much worse in terms of the energy costs). In this case one of the most appropriate (from the viewpoint of "energy costs" - "pressure on soil" criteria) technological transport vehicles is "Bars UTES 271" on the elastic tyre covers. The seeds are planted with the sowing unit traveling speed being 35-40 km\h. The seeds are placed to the depth of 3-3,5 cm under the overmoistened soil layer (such moving dynamics deals easily with the small-scale irregularities of the field to be sown).

Compliance with the criterion "Industrial Applicability" can be proved by the below stated example of the proposed invention particular usage.

The proposed method of increasing seed crop productivity was tested in farm "CJSC named after S. M. Kirov" of Veydelevsky district of Belgorod region. To increase the accuracy of the experiment the field with the total area of 123 ha was divided into two sections. The first section was cultivated in a traditional way; the second one was cultivated with the developed invention applied.

Both the proposed and traditional method provided for the autumn soil preparation including its plowing and weed killing. However in springtime the seeds were placed into the overmoistened soil just after melting of the snow cover with the sowing machine moving speed being 40 km\h. As the sowing machine power device the technological transport vehicle "Bars UTES 271" (on the elastic tyre covers) was used, capable of functioning at the soil pressure of about 0,2kgf\cm² with the seeds placed just under the overmoistened soil layer with the chosen depth of penetration (in accordance with the agro-technical requirements) of 3 cm.

The sowing works on the field section processed under the proposed method were completed 18 days earlier than the traditional works.

The remarkable fact is the there was not a single rain on this field over the entire summer time period. The soil was covered with deep cracks on this section.

The crop productivity on the field section cultivated according to the proposed method amounted to 22,39 dt/ha and on the section cultivated traditionally - 9,1 dt/ha, thus the crop productivity difference made 13,29 dt/ha (the results are certified by the respective report).

The method proposed was additionally tested in "Rusagro-Invest" LLC on the field with the area of 108 ha. According to the harvesting results the productivity of the crop cultivated by the proposed method was 24,1 dt/ha with the average farm productivity of 16,2 dt/ha. The productivity difference has made 7,9 dt/ha (the results are certified by the respective report).

Therefore, the proposed method:
- facilitates agricultural crop productivity;
- reduces weather effects on the yields;
- increases the process ecological compatibility
- increases resource saving when cultivating crops (as the fuel consumption of "Bars UTES 271"is 0,2 l/ha and the cost of fuel used per shift is 1692 rubles, while the fuel consumption of self-propelled sprayer John Deere 4930 is 1,2 l/ha and the cost of fuel used per shift is 5200 rubles);

The invention is thus related to the agricultural production, namely to the production of seed crops. One of the issues related to receiving of the high yield of the specified crops is the issue of their timely sowing, soil moisture conservation and ecological compatibility. The invention proposed is aimed at simplification of the crop productivity increase process, reducing its prime cost and increasing ecological compatibility. The specified goal can be achieved due to the fact that where the well-known crop productivity increase method based on seed time optimization is used, including in the areas of risk farming, according to the invention the seeds are planted to the wet, overmoistened and / or slurry-type soil, perhaps under the rain, right after the rain or immediately after the snow cover melting, the sowing unit traveling speed being 1-60 km\h, provided that a technological transport vehicle capable of operating under pressure on soil of 0,4kgf\cm² or less up to zero, for example, "Bars UTES 271" on the elastic tyre covers or the air-cushion device is used as a sowing unit power device. In this case the seeds are placed just under the overmoistened soil layer with the depth of penetration being from 0,2 to 15 cm, 1.

## Claims

1. A method for increasing crop yields, through optimization of sowing times, comprising:
sowing crop seeds in soil in a moisture-saturated state,
while using a sowing assembly traveling at a speed of between 1 and 60 km/hour,
while using a load-bearing portion of the sowing assembly being a utility vehicle operating with a pressure on the soil of between zero and 0.4 kgf/cm2, kgf/cm2 standing for kilogram-force per square centimeter, and
wherein said sowing comprises burying said crop seeds directly under a layer of the soil in the moisture-saturated state with a burial depth of the seeds of between 0.2 and 15 cm.

2. The method according to claim 1, wherein the sowing is performed during rainfall, immediately following a rain or directly after a snowmelt.

3. The method according to claim 1 or 2, wherein the sowing assembly is a vehicle configured to operate with a pressure on the soil of at most 0.2 kgf/cm2.

4. The method according to any one of claims 1 to 3, wherein the load-bearing portion comprises elastic tire covers or an air cushion.

## Patentansprüche

1. Verfahren zur Erhöhung von Ernteerträgen durch Optimierung von Saatzeiten, umfassend:
Säen von Kulturpflanzensamen in Boden in einem feuchtigkeitsgesättigten Zustand,
während eine Saatanordnung verwendet wird, die sich mit einer Geschwindigkeit von zwischen 1 und 60 km/Stunde fortbewegt,
während ein lasttragender Abschnitt der Saatanordnung verwendet wird, die ein Nutzfahrzeug ist, das mit einem Druck auf den Boden von zwischen null und 0,4 kgf/cm2 arbeitet, wobei kgf/cm2 für Kilogramm-Kraft pro Quadratzentimeter steht, und
wobei das Säen ein Einarbeiten der Kulturpflanzensamen direkt unter einer Schicht des Bodens im feuchtigkeitsgesättigten Zustand mit einer Einarbeitungstiefe der Samen von zwischen 0,2 und 15 cm umfasst.

2. Verfahren nach Anspruch 1, wobei das Säen bei Regenfall, unmittelbar nach einem Regen oder direkt nach einem Schneeschmelzen durchgeführt wird.

3. Verfahren nach Anspruch 1 oder 2, wobei die Saatanordnung ein Fahrzeug ist, das konfiguriert ist, um mit einem Druck auf den Boden von höchstens 0,2 kgf/cm2 zu arbeiten.

4. Verfahren nach einem der Ansprüche 1 bis 3, wobei der lasttragende Abschnitt elastische Reifenabdeckungen oder ein Luftkissen umfasst.

## Revendications

1. Procédé pour augmenter les rendements de culture, grâce à une optimisation des temps de semis, comprenant :
semer des semences dans un sol à l'état saturé d'humidité,
tout en utilisant un ensemble semeur se déplaçant à une vitesse comprise entre 1 et 60 km/heure,
tout en utilisant une partie porteuse de charge de l'ensemble semeur qui est un véhicule de travail fonctionnant avec une pression sur le sol comprise entre zéro et 0,4 kgf/cm2, kgf/cm2 représentant le kilogramme-force par centimètre carré, et
dans lequel ledit semis comprend l'enfouissement direct desdites semences dans une couche du sol à l'état saturé d'humidité avec une profondeur d'enfouissement des semences comprise entre 0,2 et 15 cm.

2. Procédé selon la revendication 1, dans lequel le semis est effectué pendant une pluie, immédiatement après une pluie ou directement après une fonte des neiges.

3. Procédé selon la revendication 1 ou 2, dans lequel l'ensemble semeur est un véhicule configuré pour fonctionner avec une pression sur le sol d'au plus 0,2 kgf/cm2.

4. Procédé selon l'une quelconque des revendications 1 à 3, dans lequel la partie porteuse de charge comprend des revêtements pour pneumatique élastiques ou un coussin d'air.
